# EUROPEAN PATENT APPLICATION

(11) **EP 1 202 154 A1**
(43) Date of publication of application: **02.05.2002**
(21) Application number: 00901989.4
(22) Date of filing: 28.01.2000
(51) Int. Cl.: G06F 3/00, G06F 15/167

(54) **BACKPLANE**

(30) Priority: 17.05.1999 JP 13631999
(71) Applicant: Technowave, Ltd., Tokyo, 160-0003 (JP)
(72) Inventor: YOSHIDA, Takashi, Chiba 270-0033 (JP); KOMAZAWA, Yuuichi, Sapporo-shi Hokkaido 007-0808 (JP)
(74) Representative: HOFFMANN - EITLE
(86) International application number: JP0000484
(87) International publication number: WO0070434

(57) **Abstract**

A plurality of buses are provided on a backplane, while these buses can be used by different CPU boards and a shared memory can be accessed by each CPU.

The arrangement above has a plurality of CPUs made it possible that function on a single backplane and these CPUs share data by using the shared memory.

In addition, the slots for functional boards can be distributed between arbitrary buses, making it possible to adjust the number of functional boards used by each CPU board as well as to achieve flexibility in selecting the number of functional boards being used in accordance with the purpose of a particular CPU board.

## Description

### Field of Technology

The present invention relates to a backplane designed for connecting CPU boards and functional boards and employed in the field of computer, and more particularly to a backplane that has a plurality of buses, allows data to be shared among these buses, and is capable of changing slots for functional boards connectable with each of these buses.

### Background Technology

General-purpose backplanes for connecting CPU boards and functional boards are currently used on a wide scale in the field of computer. As used herein, the term "functional board" refers to a peripheral board other than a CPU board.

A general-purpose backplane has a plurality of slots for mounting such boards, and buses used by the boards mounted in the slots.

Conventional backplanes, however, are limited to a single bus system.

According to currently adopted bus standards (ISA, PCI, MVE, and the like), there is arranged so that a single master controls a slave, and the presence of multiple masters is not permitted. In other words, only one master CPU can be connected to a bus, allowing only one master CPU board to be mounted on a conventional backplane

Multitasking is commonly performed by an OS.

This approach is disadvantageous, however, in that when multitasking is performed only by the OS in a single computer, CPU performance becomes limited as a matter of course, and there is a limit to the amount of tasks that can substantially be performed.

When the OS alone is upgraded in the same computer architecture, there was a problem that although the software designed for the previous version of the OS can still run the current hardware, the software needed to be rewritten for the new OS.

It is apparent that conventional practice allows a plurality of backplanes to be used, data to be processed by employing a plurality of CPUs, and results to be exchanged by communication means. However, this approach pauses a problem in its speed and the processing procedure becomes complicated.

Formally, there are conventional techniques in which a single backplane is provided with a plurality of bus lines, but all these techniques merely involve mounting a plurality of completely independent buses and it was impossible to exchange data directly, but rather there is no other means but using communication to exchange data among a plurality of CPUs. Specifically, these techniques are similar to the present invention in that they allow the functions of two backplanes to be combined in a single compact arrangement, but all other features are the same as those of the case where the above-described plurality of backplanes are used, and thereby being short of addressing other problems inherent to conventional backplanes.

Another distinctive feature of this approach is that the relation between buses and slots is established in advance. In other words, it is decided in advance which slot is to be used with which bus. Therefore, when, for example, a single backplane has two bus lines, and each bus line is provided with two slots for functional boards, a single bus line enables to use only functional boards up to two, and even when the other bus requires only a single functional board, it was impossible to use three functional boards on the other bus. Providing a backplane with a plurality of buses inevitably limits the space available for a single CPU board.

As a result, there was a problem that significant limitations are imposed when conventional backplanes are used with non-interchangeable slots for functional boards.

### Abstract of the Invention

Aimed at overcoming the above-described shortcomings of the prior art, the invention set forth in claim 1 provides a backplane comprising a plurality of buses, a group of slots for connecting CPU boards and functional boards, and a shared memory accessible from each of the buses.

The presence of a plurality of buses allows a plurality of CPU boards to be mounted. The arrangement is not limited to providing a plurality of buses but also allows the shared memory to be accessed from each of the buses.

The invention set forth in claim 2 pertains to the backplane defined in Claim 1 wherein each slot of the group of slots can be switchably connected to any bus.

This arrangement allows the slots to be used in an efficient manner because any slot can be switched to any bus on the backplane.

The invention set forth in claim 3 resides in a backplane comprising a plurality of buses, a plurality of slots for CPU boards that each corresponds to said each bus, a shared memory accessible from individual CPUs when the CPU boards are connected to each of the slots for these CPU boards, and a plurality of slots for functional boards.

In this arrangement, the plurality of slots for CPU boards are each connected to dedicated buses, and a shared memory can be accessed from each of the CPU boards.

The invention set forth in claim 4 pertains to the backplane defined in Claim 3 wherein the slots for functional boards each can be switchably connected to any bus.

Depending on the operating conditions, the slots for functional boards can be switchably connected to those buses that are normally designed for CPU boards that need functional boards.

The invention set forth in claim 5 resides in a backplane, said backplane comprising:
a first slot for CPU board;
a second slot for CPU board;
a shared memory accessible both from the first slot for CPU board and from the second slot for CPU board;
bus lines disposed between the first slot for CPU board and the second slot for CPU board; and
a group of slots for functional boards connected to the bus lines;
wherein on off switches for enabling and disabling the bus lines are disposed between individual slots of the group of slots for functional boards.

The present invention allows two CPU boards to be mounted on a single backplane. This arrangement is not limited to the ability to mount two CPU boards but allows a shared memory to be accessed from both CPUs- Data can therefore be shared between the CPUs without the use of communication.

In this arrangement, buses are laid between both CPUs, and a plurality of slots for functional boards are disposed on the buses. Providing on-off switches between the slots makes it possible to divide the buses into two by cutting off a bus by any of the on-off switches. The CPUs can utilize a bus section and a functional board section that extends all the way to the cut-off point.

Depending on which on-off switch cuts of the buses, it is possible to adjust the number of functional boards belonging to each of the CPUs in question, and thereby making it possible to use resources more efficiently.

The invention set forth in claim 6 pertains to the backplane defined in cLaim 5 wherein the on-off switches are jumper switches.

Using jumper switches for the on off switches makes it possible to enable and disable the system easily and inexpensively.

### Brief Description of the Drawings

Fig. 1 is a general view of Example 1 of the present invention; and
Fig. 2 is a general view of Example 2 of the present invention.

### Preferred Embodiments of the Invention

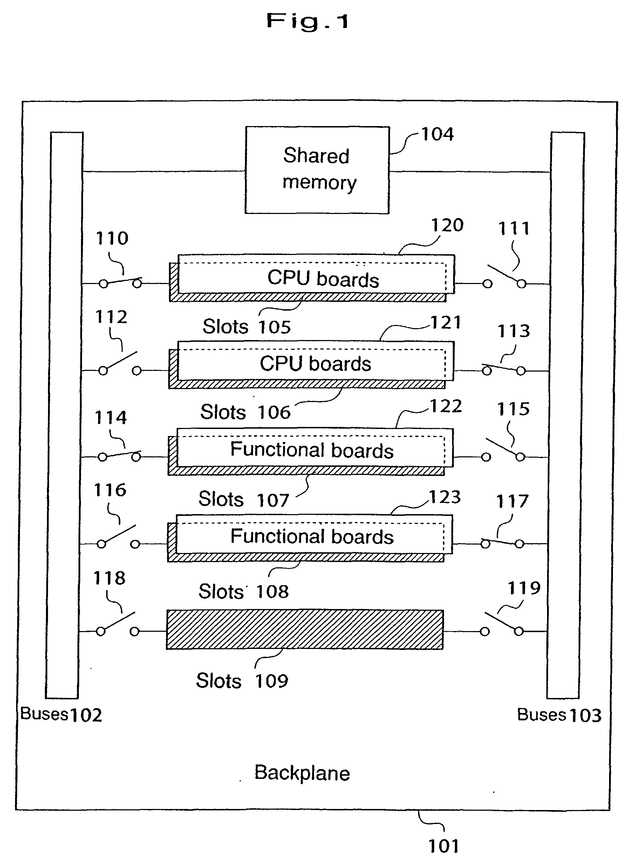

Example 1 will now be described with reference to Fig. 1.

Two buses (102 and 103) are disposed on a backplane 101, and a shared memory 104 can be accessed from each bus. As for the shared memory, there is used a dual-port RAM.

The backplane 101 is also provided thereon with five slots (slot 105 through slot 109), and each slot can be connected by switches 110-119 to either of the bus 102 or 103. This arrangement can be made safer by employing a meansin which each slot is prevented from being connected to both buses at the same time.

In Fig. 1, the switch 110 is closed and the switch 111 is open for the slot 105, so the slot 105 is connected to the bus 102. A CPU board 120 is inserted into the slot 105. In other words, the CPU board 120 can access the shared memory 104 via the bus 102.

The slot 106 is connected to the bus 103 and there is inserted therein a CPU board 121. Consequently, the CPU board 121 can access the shared memory 104 via the bus 103.

The slot 7 is connected to the bus 102 and there is inserted therein a functional board used by the CPU board 120.

The slot 108 is connected to the bus 103 and there is inserted therein a functional board used by the CPU board 121.

The slot 109 does not have any boards inserted therein this state and remains unused. The slot is not connected to either bus because the switches 118 and 119 are both open. When a functional board is used in the future by either of the CPU board 120 or 121, it is necessary to close the switch 118 or 119 corresponding to the CPU to be used, to form a connection with ether bus, and to have the functional board inserted therein.

According to the above arrangement, a backplane is provided with the CPU 120 and CPU 121 being mounted on the same backplane 101, making it possible to have a backplane where the shared memory 104 can be used by either unit and each slot can be connected to either of the buses 102 and 103.

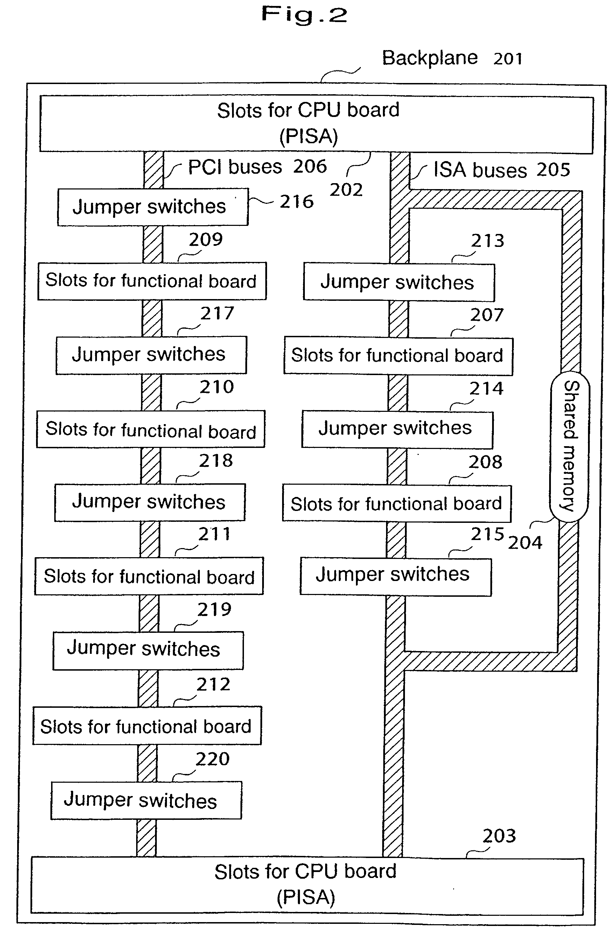

Example 2 will now be described with reference to Fig. 2.

A backplane 201 is provided thereon with two slots 202 and 203 for CPU boards, and a shared memory 204 can be accessed by the CPUs on the CPU boards inserted into the two slots. As for the shared memory, there is used a dual-port RAM. As fot each of the CPU boards, there is used a PISA board.

Buses 205 and 206 are also extended between the CPU board slots 202 and 203 on the backplane 201.

The bus 205 is an ISA bus; the bus is provided with two slots 207 and 208 for functional boards; and jumper switches 213-215 are disposed between the slots, thereby making the buses disconnectable. Consequently, the buses can be divided in two and used separately by the two CPU boards when one of the jumper switches is set in a disconnected state and the others are set in a connected state.

When, for example, the jumper switches 213 and 215 are connected and the jumper switch 214 is disconnected, the functional board slot 207 is used by the CPU board inserted into the CPU board slot 202, and the functional board slot 208 is used by the CPU board inserted into the CPU board slot 203.

The bus 206 is a PCI bus. The description given with reference to the bus 205 applies similarly to the jumper switches 216-220 and the slots 209-212 for functional boards mounted on this bus.

When, for example, the jumper switch 217 is disconnected and the other switches are connected, the functional board slot 209 is used by the CPU board inserted in the CPU board slot 2, and the functional board slots 210-212 are used by the CPU board inserted n the CPU board slot 203.

It is thus possible to provide a backplane in which two buses are mounted, it can be processed using independent CPUs for each of the buses and the data can be exchanged between these CPUs, and the number of functional board slots connected to each bus can be varied.

### Industrial Applicability

According to the present invention, a plurality of buses mounted on the same board can be used by different CPU boards. The shared memory on the backplane can be accessed from both CPU boards.

Since memory can be shared by two CPUs, it is possible to mount a new CPU board on the same backplane and to allow this CPU board to handle with great ease screen display, Internet connectivity, input techniques, communications, and other processing tasks while using conventional software conventional hardware (CPU boards) without any change thereto.

It is also easy to distinguish between CPUs for performing a heavy-load type of processing, such as computational task, and CPUs for performing interface tasks, such as displaying images on a screen. Faster processing with much simpler procedures can be achieved than when the same processing is carried out through communication or the like.

A plurality of different operating systems can be mounted on the same backplane, and these can be used to each perform specialized tasks suited to each particular operating system while the memory is shared by these operating systems.

The present invention allows these functions to be realized on a single backplane.

The number of functional boards used with such CPUs can be varied by switching, and the number of functional boards being used can be adjusted in accordance with the intended application of each CPU board, thereby making it possible to design a flexible system and efficient resource utilization.

## Claims

1. A backplane comprising:
a plurality of buses;
a group of slots for connecting CPU boards and functional boards; and
a shared memory accessible from each of the buses.

2. The backplane of Claim 1 wherein each slot in the group of slots can be switchably connected to an arbitrary bus.

3. A backplane comprising:
a plurality of buses;
a plurality of slots for CPU boards, the slots each corresponding to each said bus;
a shared memory accessible from each CPU when the CPU boards are connected to each of the slots for CPU boards; and
a plurality of slots for functional boards.

4. The backplane of Claim 3 wherein the slots for functional boards can be each switchably connected to an arbitrary bus.

5. A backplane, said backplane comprising:
a first slot for CPU board;
a second slot for CPU board;
a shared memory accessible both from the first slot for CPU board and from the second slot for CPU board;
bus lines laid between the first slot for CPU board and the second slot for CPU board; and
a group of slots for functional boards connected to the bus lines;
wherein on-off switches for enabling and disabling the bus lines are disposed between individual slots in the group of slots for functional boards.

6. The backplane of claim 5 wherein the on-off switches are jumper switches.
